# FASCICULE DE BREVET EUROPEEN

(11) **EP 2 389 306 B1**
(45) Date de publication et mention de la délivrance du brevet: **19.12.2018**
(21) Numéro de dépôt: 10704394.5
(22) Date de dépôt: 22.01.2010
(51) Int. Cl.: B61B 12/02, B61B 12/10

(54) **PROCEDE DE CONTROLE DU CHEMINEMENT DE VEHICULE DANS UNE INSTALLATION DE TRANSPORT PAR CABLE**
VERFAHREN ZUR ÜBERWACHUNG DER VORWÄRTSBEWEGUNG EINES FAHRZEUGES IN EINER SEILBAHNANLAGE
METHOD FOR MONITORING THE PROGRESS OF A VEHICLE IN A ROPEWAY INSTALLATION

(30) Priorité: 22.01.2009 FR 0900280
(43) Date de publication de la demande: 30.11.2011
(73) Titulaire: Pomagalski, 38340 Voreppe (FR)
(72) Inventeur: MARNAS, Luc, F-38250 Saint Nizier du Moucherotte (FR); BOGEY, Eric, F-38100 Grenoble (FR)
(74) Mandataire: Novagraaf Technologies
(86) Numéro de dépôt international: PCT/FR2010/000058
(87) Numéro de publication internationale: WO 2010/084271

(56) Documents cités:
- EP-A- 0 461 954
- EP-A- 1 849 675
- EP-A- 1 997 706

## Description

### DOMAINE TECHNIQUE DE L'INVENTION

L'invention concerne un procédé de contrôle du cheminement de véhicules dans une installation de transport par câble, un dispositif de contrôle du cheminement et une installation de transport par câble pour la mise en oeuvre du procédé.

L'invention concerne plus particulièrement les installations de transport par câble dans lesquels les véhicules débrayables sont désaccouplés du câble à l'entrée en station, entraînés à vitesse lente le long des quais d'embarquement ou de débarquement puis ensuite accélérés et ré accouplés au câble à la sortie de la station.

### ÉTAT DE LA TECHNIQUE

Dans les installations de transport par câble du type mentionné ci-dessus, les véhicules sont entraînés en station par des moyens d'entraînement, généralement constitués de trains de roues à bandage pneumatique entraînés en rotation et coopérant avec une piste de friction solidaire des véhicules de sorte à entraîner les véhicules.

Comme la vitesse de défilement du câble est nettement supérieure à la vitesse d'entraînement des véhicules en station, ces derniers sont beaucoup plus proches les uns des autres en station que le long du câble. Aussi est-il nécessaire de surveiller le cheminement des véhicules en station, et de prendre les mesures adéquates lorsqu'un véhicule ne chemine pas correctement, afin que les véhicules ne se tamponnent pas en station, notamment lorsque leur trajectoire présente des virages. En effet, ces tamponnements seraient dangereux pour les personnes extérieures aux véhicules et inconfortables pour les usagers embarqués. De plus, ils risqueraient d'endommager l'installation et de provoquer un cheminement chaotique non contrôlé. Typiquement, afin d'éviter ces tamponnements, l'installation est arrêtée lorsqu'un cheminement incorrect d'un véhicule a été détecté.

Afin de surveiller le cheminement des véhicules, il est connu des dispositifs de contrôle comprenant, en station, une pluralité de détecteurs de véhicules délimitant des zones de contrôle et un codeur délivrant des impulsions représentatives du défilement du câble tracteur.

Lorsqu'un véhicule passe devant un détecteur d'entrée de zone, un compteur est déclenché. Les impulsions représentatives du défilement du câble produites par le codeur incrémentent alors ledit compteur. Lorsque ledit véhicule est détecté par le détecteur de sortie de zone, le compteur est arrêté. Lorsque la valeur du compteur dépasse une valeur seuil présélectionnée, on peut alors conclure que le véhicule ne chemine pas correctement dans la zone et l'installation est alors arrêtée.

Toutefois, la valeur de seuil est une valeur constante correspondant à une longueur maximale de défilement du câble lors du cheminement du véhicule dans une zone de contrôle, lorsque le débit de circulation des véhicules est maximal. Ainsi, cette valeur de seuil correspond à une valeur de précaution maximale et est bien adaptée pour éviter le tamponnement de véhicules lorsque l'installation fonctionne à plein régime.

Toutefois, lorsque le débit de l'installation ou la vitesse de défilement du câble tracteur est plus faible, la valeur de seuil pourrait être plus importante sans pour autant courir des risques de tamponnement. Par conséquent, lorsque l'installation fonctionne à des débits ou des vitesses de défilement du câble plus faible, il arrive parfois que l'installation soit arrêtée alors que la situation n'est pas critique car des tamponnements de véhicule ne sont pas encourus. L'installation subit donc des arrêts qui ne sont pas indispensables pour assurer son bon fonctionnement. La disponibilité de l'installation n'est donc pas optimale.
Il est connu de EP 461 954 un procédé permettant à partir de deux signaux successifs de détection de déterminer une variable représentative d'une longueur de défilement du câble entre ces deux signaux.
EP 1997 706 décrit plusieurs capteurs disposés le long du tronçon sur lequel circule des cabines.

### OBJET DE L'INVENTION

L'invention vise à remédier à ces problèmes en proposant un procédé et un dispositif de contrôle du cheminement permettant de d'augmenter la disponibilité de l'installation, sans pour autant diminuer sa fiabilité.

À cet effet, et selon un premier aspect, l'invention propose un procédé de contrôle du cheminement de véhicules dans une installation de transport par câble, ladite installation comportant:
- des véhicules à pinces débrayables circulant selon un débit D ;
- un câble tracteur entraîné, à une vitesse de défilement Vc, pour entraîner les véhicules lorsqu'ils sont accouplés au câble; et
- au moins une station d'embarquement et/ou de débarquement des passagers comportant au moins un tronçon dans lequel les véhicules, désaccouplés du câble, sont entraînés par des moyens d'entraînement en station;
ledit procédé comprenant:
- une étape de détermination d'un seuil variable en fonction de la vitesse Vc de défilement du câble et/ou du débit D de circulation des véhicules;
- une étape de détection comportant l'émission d'un signal de détection lors du passage des véhicules devant au moins un repère fixe;
- une étape de mesure d'une variable représentative d'une longueur de défilement du câble tracteur entre deux signaux de détection ;
une étape de diagnostic du cheminement des véhicules en station par comparaison du seuil avec la variable représentative d'une longueur de défilement du câble et l'étape de détection comporte l'émission d'un premier signal de détection lors du passage d'un véhicule devant un premier repère Rₙ et l'émission d'un second signal de détection lors du passage dudit véhicule devant un second repère Rₙ₊₁, la variable représentative d'une longueur de défilement étant mesurée entre lesdits premier et second signaux de détection.

Aussi, selon l'invention, le seuil, variable, est déterminé en fonction de la vitesse de défilement du câble et/ou du débit de circulation des véhicules.

Par conséquent, lorsque la vitesse de défilement du câble est plus faible, le seuil peut être augmenté sans pour autant risquer des tamponnements. En effet, dans ce cas, le cheminement des véhicules en station peut être plus lent que souhaité car les véhicules s'immobilisent plus rapidement lorsque l'installation est stoppée.

De même, lorsque le débit de circulation est plus faible et que la distance de câble laissée entre deux véhicules successifs est plus importante, les véhicules peuvent également circuler plus lentement.

Par conséquent, l'invention permet d'éviter des arrêts intempestifs de l'installation et donc d'augmenter la disponibilité de l'installation.

Selon un mode de réalisation, on contrôle le cheminement de i véhicules Vi dans n zones Zₙ s'étendant entre deux repères Rₙ, Rₙ₊₁, ledit procédé comprenant pour chaque zone Zₙ :
- une étape de détermination d'un seuil Sₙ ;
- et, pour chaque véhicule Vi cheminant dans ladite zone Zₙ,
- une étape de détection comportant l'émission d'un premier signal de détection lors du passage du véhicule Vᵢ devant le repère Rₙ et l'émission d'un second signal de détection lors du passage dudit véhicule Vᵢ devant le repère Rₙ₊₁ ;
- une étape de mesure d'une variable Lₙ, i entre le premier et le second signal de détection; et
- une étape de diagnostic du cheminement du véhicule Vᵢ, dans la zone Zₙ par comparaison du seuil Sₙ avec la variable L_{n,i}.

Ainsi, l'invention permet de contrôler une pluralité de zones et de contrôler l'intégralité des véhicules.

Avantageusement, le seuil Sₙ peut être en outre déterminé en fonction:
- du rayon de courbure de l'installation dans la zone Zₙ;
- du rapport de réduction entre la vitesse Vc de défilement du câble et la vitesse d'entraînement des véhicules par les moyens d'entraînement en station, dans la zone Zₙ ; et/ou
- de l'encombrement des véhicules.

En effet, il peut être important de prendre en compte l'encombrement des véhicules et le rayon de courbure de l'installation dans la zone de contrôle considérée pour déterminer la valeur de seuil qui sera nécessaire pour éviter les tamponnements.

En outre, il on a avantage à prendre en compte le rapport de réduction entre les moyens d'entraînement dans la zone considérée et la vitesse de défilement du câble pour déterminer le seuil.

Dans un mode de réalisation, l'étape de détection comporte l'émission d'un premier signal de détection lors du passage d'un premier véhicule Vᵢ devant un repère Rₙ et l'émission d'un second signal de détection lors du passage d'un second véhicule Vᵢ₊₁, suivant le premier véhicule, devant le repère Rₙ, la variable K_{n, i+1} représentative de la longueur de défilement étant mesurée entre lesdits premier et second signaux de détection. Ainsi, on vérifie également la distance séparant deux véhicules en station.

Avantageusement, l'on arrête l'installation lorsque la variable représentative de la longueur de défilement du câble est supérieure à la variable de seuil. Ainsi, le procédé permet d'éviter des tamponnements de véhicule lorsque le cheminement d'un véhicule est défaillant.

Dans un mode de réalisation, le procédé de contrôle comprend une étape de mesure de la vitesse Vc de défilement du câble.

Avantageusement, les vitesses d'entraînement des moyens d'entraînement en station sont corrélées à la vitesse Vc de défilement du câble.

Selon un deuxième aspect, l'invention concerne un dispositif de contrôle du cheminement de véhicules dans une installation de transport par câble comprenant:
- des véhicules à pinces débrayables circulant selon un débit D ;
- un câble tracteur entraîné, à une vitesse de défilement Vc, pour entraîner les véhicules lorsqu'ils sont accouplés au câble; et
- au moins une station d'embarquement et/ou de débarquement des passagers comportant au moins un tronçon dans lequel les véhicules, désaccouplés du câble, sont entraînés par des moyens d'entraînement en station ;
ledit dispositif comprenant:
- des moyens de calcul pour déterminer un seuil S variable en fonction de la vitesse Vc de défilement du câble et/ou du débit D de circulation des véhicules;
- des moyens de détection des véhicules aptes à émettre un signal de détection lors du passage des véhicules devant au moins un repère fixe;
- des moyens de mesure d'une variable L représentative d'une longueur de défilement du câble tracteur entre deux signaux de détection ; et
- des moyens de comparaison du seuil S avec la variable L représentative d'une longueur de défilement du câble tracteur,
- des moyens de détection des véhicules aptes à émettre un signal de détection lors du passage des véhicules devant une pluralité de repères fixes, et
- dans lequel les repères fixes successifs sont écartés d'une distance calculée en fonction de la vitesse d'entraînement théorique des véhicules entre les repères..

Le dispositif de contrôle selon l'invention permet également d'augmenter la disponibilité de l'installation sans diminuer sa fiabilité.

En effet, plus la zone d'embarquement/débarquement est proche d'une zone et plus la vitesse d'entraînement des véhicules, dans ladite zone, diminue et par conséquent plus les véhicules successifs sont rapprochés les un des autres. Aussi, plus la zone de contrôle est proche de la zone d'embarquement/ débarquement et plus la longueur de la zone de contrôle devra être faible.

Enfin, selon un troisième aspect, l'invention concerne une installation de transport par câble comportant:
- des véhicules à pinces débrayables circulant selon un débit D ;
- un câble tracteur entraîné, à une vitesse de défilement Vc, pour entraîner les véhicules lorsqu'ils sont accouplés au câble ; et
- au moins une station d'embarquement et/ou de débarquement des passagers comportant au moins un tronçon dans lequel les véhicules, désaccouplés du câble, sont entraînés par des moyens d'entraînement en station; et
- un dispositif de contrôle du cheminement de véhicules selon le second aspect de l'invention.

### BRÈVE DESCRIPTION DES FIGURES

D'autres objets et avantages de l'invention apparaîtront au cours de la description qui suit, faite en référence aux dessins annexés, dans lesquels:

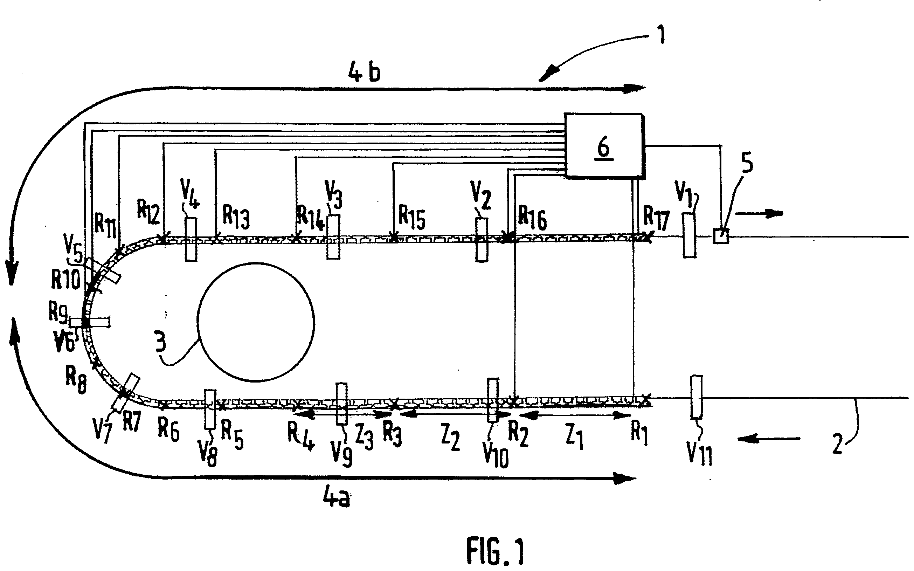

- la figure 1 représente une installation de transport par câble selon l'invention;
- la figure 2 est un graphique illustrant schématiquement l'évolution de la valeur de seuil Sₙ en fonction de la vitesse de défilement du câble Vc; et
- la figure 3 est un graphique illustrant schématiquement l'évolution de la valeur de seuil Sₙ en fonction du débit de circulation de véhicules.

### EXEMPLE DE RÉALISATION

L'installation 1 comporte un câble tracteur 2 s'étendant en boucle fermée entre deux stations d'embarquement/débarquement, dont une seule est ici représentée. Le câble 2 passe en station sur des poulies 3 d'extrémité dont l'une est motrice afin d'entraîner le câble tracteur 2 à une vitesse de défilement Vc. L'installation 1 peut également comporter d'autres stations intermédiaires entre les stations d'extrémité pour l'embarquement et/ou le débarquement des passagers.

L'installation comporte également des véhicules V₁, Vᵢ. Bien évidemment, on entend par véhicule, tout moyen de transport par câble tel que les télésièges, les télécabines, les téléphériques, etc. Les véhicules V₁, Vᵢ sont équipés d'une pince débrayable, non représentée, permettant d'accoupler les véhicules V₁, Vᵢ au câble 2 entre les stations et de les désaccoupler dans la station d'embarquement et/ou de débarquement.

A l'entrée des stations, les véhicules V₁, Vᵢ sont désaccouplés du câble 2, guidés sur des rails et entraînés par des moyens d'entraînement en station. Les moyens d'entraînement en station sont répartis entre un premier tronçon 4a de décélération et un second tronçon 4b d'accélération. Dans le tronçon de décélération 4a, le mouvement des véhicules V₁, Vᵢ est décéléré de sorte à permettre l'embarquement et/ou le débarquement des utilisateurs. Dans le tronçon d'accélération 4b, le mouvement des véhicules V₁, Vᵢ est ré accéléré à une vitesse sensiblement égale à celle du câble tracteur 2, de sorte à permettre le ré accouplement sans à-coups des véhicules V₁, Vᵢ au câble 2.

Dans un mode de réalisation particulier, les moyens d'entraînement des véhicules V₁, Vᵢ en station comprennent des trains de roues, à bandage pneumatique, échelonnés le long des tronçons de décélération 4a et d'accélération 4b. Les trains de roues coopèrent par friction avec une piste de friction portée par les véhicules V₁, Vᵢ, par exemple un patin porté par le dessus de la pince débrayable, de sorte à entraîner les véhicules V₁, Vᵢ en station.

Au moins un des trains de roues des moyens d'entraînement en station est accouplé à une prise de force prenant son mouvement sur le câble 2, sur la poulie motrice 3 ou directement sur les moyens moteurs. En outre, les roues successives des moyens d'entraînement sont accouplées par des dispositifs de réduction et/ou de multiplication permettant d'obtenir une décélération ou une accélération des véhicules V₁, Vᵢ. Les roues sont donc synchronisées avec le mouvement du câble 2 et les vitesses d'entraînement des moyens d'entraînement en station sont donc corrélées à la vitesse Vc de défilement du câble 2.

Dans un mode de réalisation, les roues sont accouplées par l'intermédiaire de courroies engagées sur des poulies auxiliaires montées coaxialement à chaque roue. Chaque roue est solidaire de deux poulies auxiliaires, chacune coopérant respectivement avec une courroie, l'une des courroies s'engageant sur l'une des poulies auxiliaires de l'une des roues adjacentes et l'autre des courroies coopérant avec l'une des poulies auxiliaires de l'autre des roues adjacentes. Les dimensions des poulies permettent d'assurer le rapport de réduction entre les vitesses de rotation des roues. Afin d'assurer l'entraînement des trains de roues, au moins l'une des roues peut être reliée, par l'intermédiaire d'une courroie, à une prise de force motrice dérivée du câble 2, de la poulie 3 ou des moyens moteurs.

Les stations pourront également comprendre un garage, non représenté, permettant de stocker les véhicules V₁, Vᵢ qui ne sont pas utilisés.

Par ailleurs, l'installation selon l'invention est équipée d'un dispositif de contrôle du cheminement de véhicules en station.

Le dispositif de contrôle comporte une pluralité de moyens R₁, Rₙ₊₁ fixes de détection des véhicules V1, Vᵢ, aptes à émettre un signal de détection lors du passage d'un véhicule Vᵢ. Les moyens de détection R₁, Rₙ₊₁ sont répartis le long des tronçons d'accélération 4b et de décélération 4a et définissent une pluralité de zones de contrôle Z₁, Zₙ, délimitées par deux moyens de détection successifs, disposés respectivement à l'entrée (repère Rₙ) et à la sortie (repère Rₙ₊₁) de la zone de contrôle Zₙ. Les moyens de détection sont, par exemple, des capteurs inductifs détectant le mors des pinces débrayables des véhicules V₁, Vⱼ. Les moyens de détection génèrent un front ascendant lorsqu'un véhicule Vᵢ pénètre dans leur champ de détection et un front descendant lorsque le véhicule Vᵢ quitte ledit champ de détection.

La distance entre les moyens de détection R₁, Rₙ₊₁ successifs décroît du début de la zone de décélération 4a jusqu'à la fin de celle-ci est croît du début de la zone d'accélération 4b jusqu'à sa fin. En effet, la longueur des zones Zₙ est corrélée à la vitesse des véhicules dans ladite zone.

Par ailleurs, le dispositif de contrôle comporte des moyens de mesure d'une variable L_{n, i}, Kₙ représentative d'une longueur de défilement du câble tracteur 2 entre deux signaux de détection. Ces moyens de mesure comporte des moyens 5 pour générer des impulsions en fonction du déplacement du câble et un compteur qui est incrémenté en fonction de ces impulsions.

Dans un mode de réalisation, les moyens 5 pour générer des impulsions en fonction du déplacement du câble 2 comporte un galet, non représenté, connecté mécaniquement au câble 2 ou à une poulie 3 de support du câble 2 et un codeur monté en relation avec le galet de sorte à générer des impulsions lors du déplacement du câble 2.

Dans un autre mode de réalisation, ces moyens 5 pourront comprendre des capteurs électromagnétiques disposés en vis-à-vis du câble 2, métallique à torons dans ce cas, générant des signaux périodiques en fonction du pas des torons et du déplacement du câble 3. Les signaux périodiques délivrés par les capteurs électromagnétiques subissent un traitement de sorte à générer des impulsions en fonction de l'avancement du câble 3. De tels moyens sont notamment décrits dans les documents EP 0 161 959, GB 2 183 044 ou US 4 338 565.

Un compteur est activé par le front descendant du moyen de détection Rₙ, à l'entrée de la zone Zₙ, et désactivé par le front montant du moyen de détection Rₙ₊₁ à la sortie de la zone Zₙ. Lorsqu'il est actif, le compteur est incrémenté par les impulsions générées par les moyens 5 lors déplacement du câble. Ainsi, le compteur est apte à délivrer la variable L_{n, i} représentative de la longueur de défilement du câble tracteur 3 entre les deux signaux de détection du véhicule Vᵢ, respectivement à l'entrée et à la sortie de la zone de contrôle Zₙ. Cette variable L_{n, i} est représentative du défilement du câble 2 tracteur lors du cheminement d'un véhicule Vᵢ dans la zone de contrôle Zₙ. Cette variable L_{n, i} est re-calculée pour chaque véhicule Vᵢ pénétrant dans la zone Zₙ. Bien évidemment, en fonctionnement normal, un seul véhicule Vᵢ chemine dans une zone de contrôle Zₙ. Cette variable L_{n, i}, permet de vérifier le cheminement de chaque Vᵢ, dans chaque zone de surveillance Zₙ.

On notera, que lorsque l'on augmente la capacité de l'installation, en réintroduisant dans l'installation des véhicules stockés dans le garage, on inhibe le moyen de détection à la sortie de la zone dans laquelle sont ré introduits les véhicules.

Avantageusement, un autre compteur est activé par un front descendant d'un moyen de détection Rₙ, lors du passage d'un premier véhicule Vᵢ et désactivé par un front descendant dudit moyen de détection Rₙ, lors du passage du véhicule suivant Vᵢ₊₁. Lorsqu'il est actif, le compteur est également incrémenté par les impulsions générées par les moyens 5, lors du déplacement du câble 2. Dans ce cas, la variable Kₙ délivré par le compteur est représentative de la longueur de défilement du câble 2 entre deux véhicules successifs Vᵢ et Vᵢ₊₁ et permet de vérifier que deux véhicules successifs ne se suivent pas de trop près.

Les compteurs sont logés dans une unité centrale de traitement 6 connectés aux moyens de détection R₁, Rₙ₊₁ et aux moyens 5 pour générer des impulsions en fonction du déplacement du câble 2.

L'unité centrale 6 comprend en outre des moyens de calcul. Ces moyens de calculs sont aptes à déterminer, pour chaque zone de contrôle Zₙ, un seuil Sₙ variable en fonction de la vitesse de défilement Vc du câble 3 et/ou du débit D de circulation des véhicules.

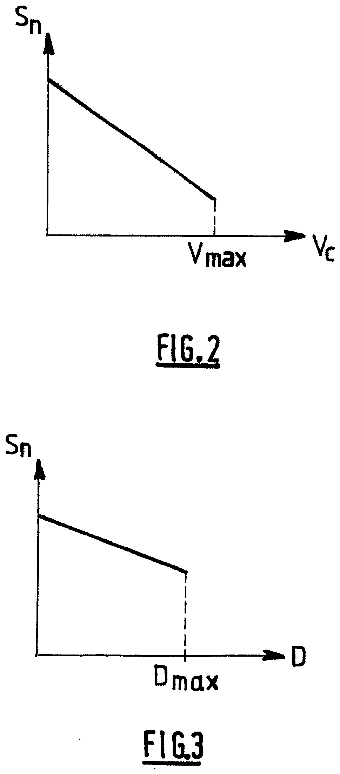

À titre d'exemples, la figure 2 illustre la diminution de la valeur seuil Sₙ avec l'augmentation de la vitesse de défilement Vc du câble 3 et la figure 3 illustre la diminution de la valeur seuil Sₙ avec l'augmentation du débit D.

On prévoit, par exemple, d'augmenter la valeur seuil Sₙ de manière inversement proportionnelle au rapport du débit D sur le débit maximum D max. Ainsi, si le débit de l'installation correspond à 80 % du débit maximum, la valeur seuil Sₙ sera égale à 125 % de la valeur seuil correspondant au débit maximum.

On notera que l'on entend par débit D de circulation des véhicules, le nombre de véhicules passant en un point, en amont de la station considérée, par unité de temps. Le débit D dépend notamment de la vitesse de défilement du câble et de la distance de câble laissée entre deux véhicules successifs.

Bien sûr, l'unité centrale 6 permet de calculer un seuil Sₙ variable pour chacune des zones Zₙ. Aussi, le seuil Sₙ est également déterminé en fonction du rayon de courbure de l'installation dans la zone Zₙ et en fonction de l'encombrement des véhicules. En outre, le seuil Sₙ est également fonction du rapport de réduction entre la vitesse Vc de défilement du câble et la vitesse d'entraînement des véhicules par les moyens d'entraînement en station, dans la zone Zₙ considérée.

On note également qu'au démarrage de l'installation, le seuil Sₙ est majoré afin de prendre en compte les glissements.

Par ailleurs, l'unité centrale comporte également un comparateur pour comparer le seuil Sₙ à la valeur de la variable L_{n, i} représentative de la longueur de défilement du câble tracteur 2 durant le cheminement du véhicule Vᵢ dans la zone de contrôle Zₙ. Dès qu'une valeur L_{n, i}, devient supérieur à la valeur de seuil Sₙ, l'unité centrale 6 transmet à l'unité de commande de l'installation un signal de défaillance. En fonction dudit signal de défaillance, l'installation pourra être arrêtée ou la vitesse des véhicules diminuée.

Par ailleurs, l'unité centrale 6 comporte également des moyens pour calculer un autre seuil T, variable en fonction en fonction de la vitesse de défilement Vc du câble 3 et/ou du débit D de circulation des véhicules. Cette valeur de seuil T permet de vérifier que deux véhicules successifs ne se suivent pas de trop près. La valeur du seuil T est également augmentée lorsque le débit D ou la vitesse de défilement du câble Vc diminue. Un comparateur compare le seuil T à la valeur de la variable K_{n, i+1} représentative de la longueur de défilement du câble 2 entre deux véhicules successifs Vᵢ et Vᵢ₊₁. De même, dès qu'une valeur de Kₙ devient supérieure à la valeur de seuil T, l'unité centrale 6 transmet à l'unité de commande de l'installation un signal de défaillance.

Le procédé de contrôle du cheminement sera décrit par la suite.

Chaque véhicule arrivant en station est désaccouplé du câble et acheminé en station par les moyens d'entraînement en station. Dès l'arrivée du véhicule en station, on contrôle le cheminement du véhicule Vᵢ dans la première zone Z₁. Pour ce faire, l'unité centrale 5 calcule le seuil S₁ en fonction de la vitesse Vc de défilement du câble 2 et/ou du débit D en amont de la station. En outre, le compteur détermine la variable L_{1, i}, correspondant au défilement du câble 2 lors du cheminement du véhicule Vᵢ dans la zone Z₁, comprise entre le premier R₁ et le second R₂ moyen de détection. La variable L_{1, i}, est alors comparée à Z_{1.} Dès que L_{1, i} est supérieure à Z₁, l'unité centrale 6 du dispositif de contrôle de cheminement envoie un signal de défaillance à l'unité de commande de l'installation. Par la suite, l'on réalise le contrôle du cheminement dans la zone de contrôle Z₂ et ainsi de suite.

Par ailleurs, on contrôle également l'espacement entre les véhicules au niveau de chaque moyen de détection. Pour ce faire, l'unité central 6 calcule le seuil T en fonction de la vitesse Vc de défilement du câble et/ou du débit D en amont de la station. En outre, un compteur détermine la variable K_{1, 2} correspondant à la vitesse de déplacement du câble entre le passage du véhicule V₁ devant le premier moyen de détection R₁ et le passage du véhicule V₂ devant le même moyen dé détection R_{1.} La variable K_{1, 2} est alors comparée à T. Si K_{1, 2} est supérieure à T, l'unité centrale du dispositif de contrôle de cheminement envoie alors un signal de défaillance à l'unité de commande de l'installation. La même opération est réalisée pour chaque moyen de détection et entre chacun des véhicules.

Afin de répondre à des exigences de sécurité des fonctions de surveillance des installations de transport par câble, le premier capteur pourra être doublé et contrôlé en discordance.

L'invention est décrite dans ce qui précède à titre d'exemple. Il est entendu que l'homme du métier est à même de réaliser différentes variantes de réalisation de l'invention sans pour autant sortir du cadre des revendications jointes.

## Revendications

1. Procédé de contrôle du cheminement de véhicules (V1, Vn) dans une installation (1) de transport par câble, ladite installation comportant:
- des véhicules (V1, Vn) à pinces débrayables circulant selon un débit D ;
- un câble tracteur (2) entraîné, à une vitesse de défilement Vc, pour entraîner les véhicules (V1, Vn) lorsqu'ils sont accouplés au câble (2) ; et
- au moins une station d'embarquement et/ou de débarquement des passagers comportant au moins un tronçon dans lequel les véhicules (V₁, Vₙ), désaccouplés du câble (2), sont entraînés par des moyens d'entraînement en station;
ledit procédé comprenant:
- une étape de détermination d'un seuil (Sₙ, T) variable en fonction de la vitesse Vc de défilement du câble (2) et/ou du débit D de circulation des véhicules (V₁, Vᵢ) ;
- une étape de détection comportant l'émission d'un signal de détection lors du passage des véhicules (V₁, Vᵢ) devant au moins un repère fixe (R₁, Rₙ₊₁) ;
- une étape de mesure d'une variable (L_{n,i}, K_{n,i+1}) représentative d'une longueur de défilement du câble tracteur (2) entre deux signaux de détection;
- une étape de diagnostic du cheminement des véhicules (V₁, Vᵢ) en station par comparaison du seuil (Sₙ, T) avec la variable (L_{n,i}, K_{n,i+1}) représentative d'une longueur de défilement, dans lequel l'étape de détection comporte l'émission d'un premier signal de détection lors du passage d'un véhicule Vᵢ devant un premier repère Rₙ et l'émission d'un second signal de détection lors du passage dudit véhicule Vᵢ devant un second repère Rₙ₊₁, la variable L_{n,i} représentative d'une longueur de défilement étant mesurée entre lesdits premier et second signaux de détection.

2. Procédé de contrôle selon la revendication 1, dans lequel on contrôle le cheminement de i véhicules Vᵢ dans n zones Zₙ s'étendant entre deux repères Rₙ, R_{n+1'} ledit procédé comprenant pour chaque zone Zₙ :
- une étape de détermination d'un seuil Sₙ ;
et, pour chaque véhicule Vᵢ cheminant dans ladite zone Zₙ.
- une étape de détection comportant l'émission d'un premier signal de détection lors du passage du véhicule Vᵢ devant le repère Rₙ et l'émission d'un second signal de détection lors du passage dudit véhicule Vᵢ devant le repère Rₙ₊₁ ;
- une étape de mesure d'une variable L_{n, i} entre le premier et le second signal de détection;
- une étape de diagnostic du cheminement du véhicule V_{i'} dans la zone Zₙ par comparaison du seuil Sₙ avec la variable L_{n,i}.

3. Procédé de contrôle selon la revendication 2, dans lequel le seuil Sₙ est en outre déterminé en fonction du rayon de courbure de l'installation dans la zone Zₙ.

4. Procédé de contrôle selon la revendication 2 ou 3, dans lequel le seuil Sₙ est en outre déterminé en fonction du rapport de réduction entre la vitesse Vc de défilement du câble (2) et la vitesse d'entraînement des véhicules (V₁, Vᵢ) par les moyens d'entraînement en station, dans la zone Zₙ.

5. Procédé de contrôle selon l'une des revendications 1 à 4, **caractérisé en ce que** le seuil Sn est en outre déterminé en fonction de l'encombrement des véhicules (V₁, Vᵢ)

6. Procédé de contrôle selon l'une des revendications 1 à 5, **caractérisé en ce que** l'étape de détection comporte l'émission d'un premier signal de détection lors du passage d'un premier véhicule Vᵢ devant un repère Rn et l'émission d'un second signal de détection lors du passage d'un second véhicule Vᵢ₊₁, suivant le premier véhicule, devant le repère R_{n'} la variable K_{n,i+1} représentative de la longueur de défilement étant mesurée entre lesdits premier et second signaux de détection.

7. Procédé de contrôle selon l'une des revendications 1 à 6, dans lequel l'on arrête l'installation lorsque la variable (L_{n,i}, K_{n,i+1}) représentative de la longueur de défilement du câble est supérieure à la variable de seuil (Sₙ, T).

8. Procédé de contrôle selon l'une des revendications 1 à 7, comprenant une étape de mesure de la vitesse Vc de défilement du câble (2).

9. Procédé de contrôle selon l'une des revendications 1 à 8, dans lequel les vitesses d'entraînement des moyens d'entraînement en station sont corrélées à la vitesse Vc de défilement du câble (2).

10. Dispositif de contrôle du cheminement de véhicules dans une installation de transport par câble comprenant :
- des véhicules (V₁, Vₙ) à pinces débrayables circulant selon un débit D ;
- un câble (2) tracteur entraîné, à une vitesse de défilement Vc, pour entraîner les véhicules (V₁, Vₙ) lorsqu'ils sont accouplés au câble (2) ; et
- au moins une station d'embarquement et/ou de débarquement des passagers comportant au moins un tronçon dans lequel les véhicules (V₁, Vₙ), désaccouplés du câble (2), sont entraînés par des moyens d'entraînement en station ;
ledit dispositif comprenant :
- des moyens de calcul pour déterminer un seuil (Sₙ, T) variable en fonction de la vitesse Vc de défilement du câble (2) et/ou du débit D de circulation des véhicules (V₁, Vₙ) ;
- des moyens de détection des véhicules (V₁, Vₙ) aptes à émettre un signal de détection lors du passage des véhicules (V₁, Vₙ) devant au moins un repère fixe (R₁ ,Rₙ₊₁) ;
- des moyens de mesure d'une variable (L_{n,i}, K_{n,i+1}) représentative d'une longueur de défilement du câble (2) tracteur entre deux signaux de détection ; et
- des moyens de comparaison du seuil (Sₙ, T) avec la variable (L_{n,i}, K_{n,i+1}) représentative d'une longueur de défilement du câble (2) tracteur,
- des moyens de détection des véhicules aptes à émettre un signal de détection lors du passage des véhicules (V₁, Vₙ) devant une pluralité de repères fixes (R₁, Rₙ₊₁) et
dans lequel les repères fixes (R₁, Rₙ₊₁) successifs sont écartés d'une distance fonction de la vitesse d'entraînement théorique des véhicules (V₁, Vₙ) entre les repères (R₁, Rₙ₊₁).

11. Installation de transport par câble comportant:
- des véhicules (V₁, Vₙ) à pinces débrayables circulant selon un débit D ;
- un câble (2) tracteur entraîné, à une vitesse de défilement Vc, pour entraîner les véhicules (V₁, Vₙ) lorsqu'ils sont accouplés au câble (2) ; et
- au moins une station d'embarquement et/ou de débarquement des passagers comportant au moins un tronçon dans lequel les véhicules (V₁, Vn), désaccouplés du câble (2), sont entraînés par des moyens d'entraînement en station;
**caractérisée en ce qu'**elle comporte un dispositif de contrôle du cheminement de véhicules (V₁, Vn), selon la revendication 10.

## Patentansprüche

1. Steuerverfahren für den Weg von Beförderungsmitteln (V1, Vn) in einer Seilförderanlage (1), wobei die Anlage beinhaltet:
- Beförderungsmittel (V1, Vn) mit Kuppelklemmen, die entsprechend einer Förderleistung D zirkulieren;
- ein Zugseil (2), das mit einer Laufgeschwindigkeit Vc angetrieben wird, um die Beförderungsmittel (V1, Vn) anzutreiben, wenn sie am Seil (2) angekoppelt sind; und
- mindestens eine Einsteige- und/oder Aussteigestation für die Passagiere, die mindestens einen Abschnitt beinhaltet, in dem die von dem Seil (2) abgekoppelten Beförderungsmittel (V₁, Vₙ) durch Antriebsmittel in der Station angetrieben werden;
wobei das Verfahren umfasst:
- einen Schritt zum Bestimmen eines in Abhängigkeit von der Laufgeschwindigkeit V_{c} des Seils (2) und/oder der Förderleistung D der Beförderungsmittel (V₁, Vᵢ) variablen Grenzwerts (Sₙ, T) ;
- einen Detektionsschritt, der die Emission eines Detektionssignals beim Durchlauf der Beförderungsmittel (V₁, Vᵢ) vor mindestens einer feststehenden Markierung (R₁, Rₙ₊₁) beinhaltet;
- einen Schritt zum Messen einer repräsentativen Variablen (L_{n,i}, K_{n,i+1}) für eine Lauflänge des Zugseils (2) zwischen zwei Detektionssignalen;
- einen Diagnoseschritt für den Weg der Beförderungsmittel (V₁, Vᵢ) in der Station durch Vergleichen des Grenzwerts (Sₙ, T) mit der repräsentativen Variablen (L_{n,i}, K_{n,i+1}) für eine Lauflänge, wobei der Detektionsschritt die Emission eines ersten Detektionssignals beim Durchlauf eines Beförderungsmittels Vᵢ vor einer ersten Markierung Rₙ und die Emission eines zweiten Detektionssignals beim Durchlauf eines Beförderungsmittels Vᵢ vor einer zweiten Markierung Rₙ₊₁ beinhaltet, wobei die repräsentative Variable L_{n,i} für eine Lauflänge zwischen dem ersten und zweiten Detektionssignal gemessen wird.

2. Steuerverfahren nach Anspruch 1, wobei man den Weg von i Beförderungsmitteln Vᵢ in n Zonen Zₙ steuert, der sich zwischen zwei Markierungen Rₙ, R_{n+1'} erstreckt, wobei das Verfahren für jede Zone Zₙ umfasst:
- einen Schritt zum Bestimmen eines Grenzwerts Sₙ; und, für jedes Beförderungsmittel Vᵢ, das in der Zone Zₙ fährt,
- einen Detektionsschritt, der die Emission eines ersten Detektionssignals beim Durchlauf des Beförderungsmittels Vᵢ vor der Markierung Rₙ und die Emission eines zweiten Detektionssignals beim Durchlauf des Beförderungsmittels Vᵢ vor der Markierung Rₙ₊₁ beinhaltet;
- einen Schritt zum Messen einer Variablen L_{n,i} zwischen dem ersten und dem zweiten Detektionssignal;
- einen Diagnoseschritt für den Weg des Beförderungsmittels V_{i'} in der Zone Zₙ durch Vergleichen eines Grenzwerts Sₙ mit der Variablen L_{n,i}.

3. Steuerverfahren nach Anspruch 2, wobei der Grenzwert Sₙ weiter in Abhängigkeit vom Kurvenradius der Anlage in der Zone Zₙ bestimmt wird.

4. Steuerverfahren nach Anspruch 2 oder 3, wobei der Grenzwert Sₙ weiter in Abhängigkeit vom Untersetzungsverhältnis zwischen der Laufgeschwindigkeit V_{c} des Seils (2) und der Antriebsgeschwindigkeit der Beförderungsmittel (V₁, Vᵢ) durch die Antriebsmittel in der Station in der Zone Zₙ bestimmt wird.

5. Steuerverfahren nach einem der Ansprüche 1 bis 4, **dadurch gekennzeichnet, dass** der Grenzwert Sn weiter in Abhängigkeit von dem Platzbedarf der Beförderungsmittel (V₁, Vᵢ) bestimmt wird.

6. Steuerverfahren nach einem der Ansprüche 1 bis 5, **dadurch gekennzeichnet, dass** der Detektionsschritt die Emission eines ersten Detektionssignals beim Durchlauf eines ersten Beförderungsmittels Vᵢ vor einer Markierung Rn, und die Emission eines zweiten Detektionssignals beim Durchlauf eines zweiten Beförderungsmittels Vᵢ₊₁, infolge des ersten Beförderungsmittels, vor der Markierung R_{n'} beinhaltet, wobei die repräsentative Variable K_{n,i+1} für die Lauflänge zwischen dem ersten und zweiten Detektionssignal gemessen wird.

7. Steuerverfahren nach einem der Ansprüche 1 bis 6, wobei man die Anlage anhält, wenn die repräsentative Variable (L_{n,i}, K_{n,i+1}) für eine Lauflänge des Seils größer ist, als die Grenzwertvariable (Sₙ, T).

8. Steuerverfahren nach einem der Ansprüche 1 bis 7, einen Schritt zum Messen der Laufgeschwindigkeit Vc des Seils (2) umfassend.

9. Steuerverfahren nach einem der Ansprüche 1 bis 8, wobei die Antriebsgeschwindigkeiten der Antriebsmittel in der Station mit der Laufgeschwindigkeit Vc des Seils (2) in Korrelation gebracht sind.

10. Steuervorrichtung für den Weg von Beförderungsmitteln in einer Seilförderanlage, welche beinhaltet:
- Beförderungsmittel (V₁, Vₙ) mit Kuppelklemmen, die entsprechend einer Förderleistung D zirkulieren;
- ein Zugseil (2), das mit einer Laufgeschwindigkeit Vc angetrieben wird, um die Beförderungsmittel (V₁, Vₙ) anzutreiben, wenn sie am Seil (2) angekoppelt sind; und
- mindestens eine Einsteige- und/oder Aussteigestation für die Passagiere, die mindestens einen Abschnitt beinhaltet, in dem die von dem Seil (2) abgekoppelten Beförderungsmittel (V₁, Vₙ) durch Antriebsmittel in der Station angetrieben werden;
wobei die Vorrichtung umfasst:
- Berechnungsmittel zum Bestimmen eines in Abhängigkeit von der Laufgeschwindigkeit Vc des Seils (2) und/oder der Förderleistung D der Beförderungsmittel (V₁, Vₙ) variablen Grenzwerts (Sₙ, T) ;
- Mittel zum Detektieren der Beförderungsmittel (V₁, Vₙ), die imstande sind, ein Detektionssignal beim Durchlauf der Beförderungsmittel (V₁, Vn) vor mindestens einer feststehenden Markierung (R₁, Rₙ₊₁) zu emittieren;
- Mittel zum Messen einer repräsentativen Variablen (L_{n,i}, K_{n,i+1}) für eine Lauflänge des Zugseils (2) zwischen zwei Detektionssignalen; und
- Mittel zum Vergleichen des Grenzwerts (Sₙ, T) mit der repräsentativen Variablen (L_{n,i}, K_{n,i+1}) für eine Lauflänge des Zugseils (2),
- Mittel zum Detektieren der Beförderungsmittel, die imstande sind, ein Detektionssignal beim Durchlauf der Beförderungsmittel (V₁, Vₙ) vor einer Vielzahl von feststehenden Markierung (R₁, Rₙ₊₁) zu emittieren, und
wobei die aufeinanderfolgenden feststehenden Markierungen (R₁, Rₙ₊₁) um einen Abstand voneinander besabstandet sind, der von der theoretischen Antriebsgeschwindigkeit der Beförderungsmittel (V₁, Vₙ) zwischen den Markierungen (R₁, Rₙ₊₁) abhängig ist.

11. Seilförderanlage, welche beinhaltet:
- Beförderungsmittel (V₁, Vₙ) mit Kuppelklemmen, die entsprechend einer Förderleistung D zirkulieren;
- ein Zugseil (2), das mit einer Laufgeschwindigkeit Vc angetrieben wird, um die Beförderungsmittel (V₁, Vₙ) anzutreiben, wenn sie am Seil (2) angekoppelt sind; und
- mindestens eine Einsteige- und/oder Aussteigestation für die Passagiere, die mindestens einen Abschnitt beinhaltet, in dem die von dem Seil (2) abgekoppelten Beförderungsmittel (V₁, Vₙ) durch Antriebsmittel in der Station angetrieben werden;
**dadurch gekennzeichnet, dass** sie eine Steuervorrichtung für den Weg von Beförderungsmitteln (V₁, Vₙ) nach Anspruch 10 beinhaltet.

## Claims

1. A method for controlling the progression of vehicles (V₁, Vₙ) in a cable transport equipment (1), said equipment comprising:
- vehicles (V₁, Vₙ) with declutchable clamps circulating at a rate D;
- a traction cable (2) driven at a running speed Vc, for driving the vehicles (V1, Vₙ) when they are coupled to the cable (2); and
- at least one passenger embarkment and/or disembarkment station including at least a section in which the vehicles (V₁, Vₙ) that are disconnected from the cable (2) are driven by station driving means;
said method comprising:
- a step of determining a threshold (Sₙ, T) that varies depending on the running speed Vc of the cable (2) and/or on the circulation rate D of the vehicles (V₁, Vi);
- a detection step that comprises transmitting a detection signal upon the passage of vehicles (V₁, Vi) in front of at least one fixed reference (R₁, Rₙ₊₁) ;
- a step of measuring a variable (Lₙ, ᵢ, K_{n, i+1}) representative of a running length of the traction cable (2) between two detection signals;
- a step of diagnosing the progression of the vehicles (V₁, Vi) in the station by comparing the threshold (Sₙ, T) with the variable (Lₙ, ᵢ, K_{n, i+1}) representative of a running length, wherein the detection step comprises transmitting a first detection signal upon the passage of a vehicle Vᵢ in front of a first reference Rₙ and transmitting a second detection signal upon the passage of said vehicle Vᵢ in front of a second reference Rₙ₊₁, the variable L_{n, i} representative of a running length being measured between said first and second detection signals.

2. The control method according to claim 1, wherein the progression of i vehicles Vᵢ in n areas Zₙ extending between two references Rₙ, Rₙ₊₁ is monitored, said method comprising for each area Zₙ:
- a step of determining a threshold Sₙ;
and, for each vehicle Vᵢ progressing in said area Zₙ,
- a detection step that comprises transmitting a first detection signal upon the passage of vehicle Vᵢ in front of the reference Rₙ and transmitting a second detection signal upon the passage of said vehicle Vᵢ in front of the reference Rₙ₊₁ ;
- a step of measuring a variable L_{n, i} between the first and second detection signals;
- a step of diagnosing the progression of the vehicle Vᵢ, in the area Zₙ by comparing the threshold Sₙ with the variable L_{n, i}.

3. The control method according to claim 2, wherein the threshold Sₙ is further determined based on the bend radius of the equipment in the area Zₙ.

4. The control method according to claim 2 or 3 wherein the threshold Sₙ is further determined based on the reduction ratio between the running speed Vc of the cable (2) and the driving speed of vehicles (V₁, Vᵢ) by the station driving means, in area Zₙ.

5. The control method according to any one of claims 1 to 4, **characterized in that** the threshold Sₙ, is further determined based on the encumbrance of vehicles (V₁, Vᵢ).

6. The control method according to any one of claims 1 to 5, **characterized in that** the detection step comprises transmitting a first detection signal upon the passage of a first vehicle Vᵢ in front of a reference Rₙ and transmitting a second detection signal upon the passage of a second vehicle Vᵢ₊₁, following the first vehicle, in front of reference Rₙ, the variable K_{n,i+1} representative of the running length being measured between said first and second detection signals.

7. The control method according to any one of claims 1 to 6, wherein the equipment is stopped when the variable (L_{n, i,} K_{n, i+1}) representative of the running length of the cable is higher than the threshold value (Sₙ, T) .

8. The control method according to any one of claims 1 to 7, comprising a step of measuring the running speed Vc of the cable (2) .

9. The control method according to any one of claims 1 to 8, wherein the driving speeds of the station driving means are correlated to the running speed Vc of the cable (2).

10. A device for controlling the progression of vehicles in a cable transport equipment comprising:
- vehicles (V₁, Vₙ) with declutchable clamps circulating at a rate D;
- a traction cable (2) driven, at a running speed Vc, for driving the vehicles (V₁, Vₙ) when they are coupled to cable (2); and
- at least an embarkment and/or disembarkment station comprising at least a section wherein the vehicles (V₁, Vₙ) disconnected from the cable (2) are driven by station driving means;
said device comprising:
- computation means for determining a threshold (Sₙ, T) that varies depending on the running speed Vc of the cable (2) and/or on the circulation rate D of the vehicles (V₁, Vₙ);
- means for detecting vehicles (V₁, Vₙ) able to transmit a detection signal upon the passage of the vehicles (V₁, Vₙ) in front of at least a fixed reference (R₁, Rₙ₊₁) ;
- means for measuring a variable (Lₙ, ᵢ, K_{n, i+1}) representative of a running length of the traction cable (2) between two detection signals; and
- means for comparing the threshold (Sₙ, T) with the variable (Lₙ, ᵢ, K_{n, i+1}) representative of a running length of the traction cable (2);
- detection means able to transmit a detection signal upon the passage of vehicles (V₁, Vₙ) in front of a plurality of fixed references (R₁, Rₙ₊₁), and wherein the successive fixed references (R₁, Rₙ₊₁) are spaced apart at a distance being a function of the theoretical driving speed of the vehicles (V₁, Vₙ) between the references (R₁, Rₙ₊₁) .

11. A cable transport equipment including :
- vehicles (V₁, Vᵢ) with declutchable clamps circulating at a rate D;
- a traction cable (2) driven at a running speed Vc for driving the vehicles (V₁, Vₙ) when they are coupled to the cable (2); and
- at least one passenger embarkment and/or disembarkment station including at least a section in which the vehicles (V₁, Vₙ) disconnected from the cable (2) are driven by station driving means;
**characterized in that** it comprises a device for controlling the progression of vehicles (V₁, Vₙ) according to claim 10.
